# EUROPEAN PATENT SPECIFICATION

(11) **EP 2 294 533 B1**
(45) Date of publication and mention of the grant of the patent: **16.07.2014**
(21) Application number: 09745739.4
(22) Date of filing: 12.05.2009
(51) Int. Cl.: G06K 19/07, G07F 7/00

(54) **VENDING MACHINE MEMORY KEY AND/OR CARD READER**
SPEICHERKEY UND/ODER KARTENLESER FÜR VERKAUFSAUTOMATEN
LECTEUR DE CLÉ ET/OU CARTE MÉMOIRE DE DISTRIBUTEUR AUTOMATIQUE

(30) Priority: 13.05.2008 IT TO20080355
(43) Date of publication of application: 16.03.2011
(73) Proprietor: N&W Innovative Solutions S.r.l. Con Unico Socio, Chions (IT)
(72) Inventor: VITALI, Fabio, I-33170 Pordenone (IT); BUFFA, Rinaldo, I-33080 Bannia Di Fiume Veneto (IT)
(74) Representative: Bergadano, Mirko
(86) International application number: PCT/EP2009/055729
(87) International publication number: WO 2009/138407

(56) References cited:
- HID CORPORATION: "13.56 MHZ Contactless"[Online] 30 June 2007 (2007-06-30), XP002546873 Internet Retrieved from the Internet: URL:http://www.hidglobal.com/documents/icl ass_rp40_ds_en.pdf> [retrieved on 2009-09-22]
- SAKYMAT: "Vending machines go contactless"[Online] 28 February 2006 (2006-02-28), XP002546874 Internet Retrieved from the Internet: URL:http://www.rfidtag.net/pdf/Vending+Mac hine.pdf> [retrieved on 2009-09-22]

## Description

### TECHNICAL FIELD

The present invention relates to a vending machine memory key and/or card reader.

More specifically, the present invention relates to a memory key and/or card reader for product vending machines, preferably, though not necessarily, for vending food products, and of the type comprising a closed casing housing an electronic read/identification board for reading/identifying data in a user memory key and/or card; to which application the following description refers purely by way of example.

### BACKGROUND ART

In vending machines for food products, such as soft drinks, snacks, or similar, a need is felt to reduce the size of the reader, especially when this is fitted to the outer wall of the machine.

For this purpose, numerous attempts have been made over the past few years to redesign vending machine readers to achieve hardware configurations capable of reducing the overall size of the electronic read/identification board inside the housing, though a good deal of work still remains to be done.

### DISCLOSURE OF INVENTION

It is an object of the present invention to provide a memory key/card reader that can be fitted to an outer wall of a product vending machine, and is more compact than known readers.

According to the present invention, there is provided a vending machine memory key/card reader as claimed in Claim 1 and preferably, though not necessarily, in any one of the Claims depending directly or indirectly on Claim 1.

According to the present invention, there is also provided a vending machine as claimed in Claim 10.

### BRIEF DESCRIPTION OF THE DRAWINGS

A non-limiting embodiment of the present invention will be described by way of example with reference to the accompanying drawings, in which:
Figure 1 shows a view in perspective of a product/service vending machine featuring a reader in accordance with the teachings of the present invention;
Figure 2 shows an exploded view of the Figure 1 reader;
Figure 3 shows a side view of the electronic read/identification board of the Figure 2 reader;

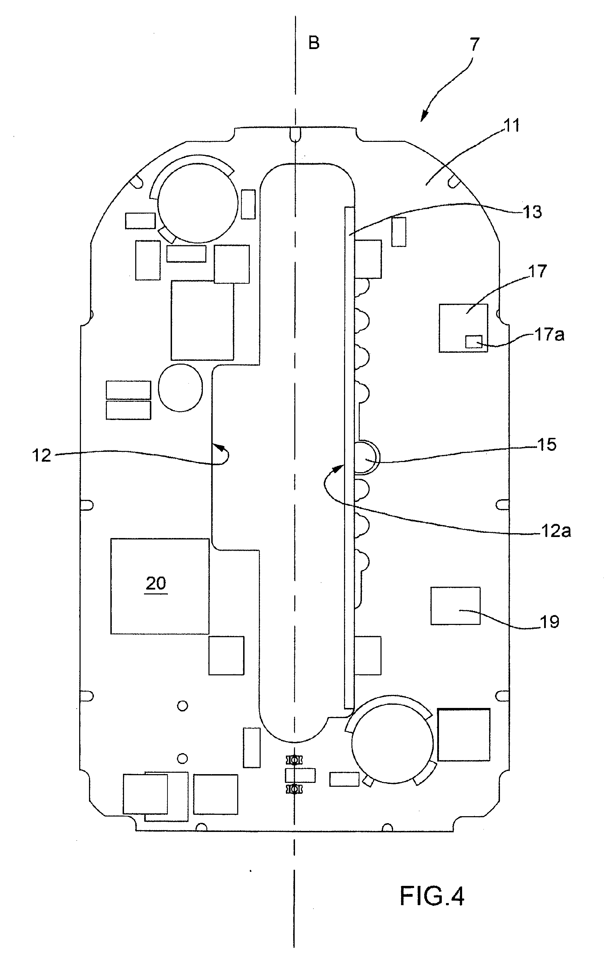

Figure 4 shows a front view of the electronic read/identification board of the Figure 2 reader.

### BEST MODE FOR CARRYING OUT THE INVENTION

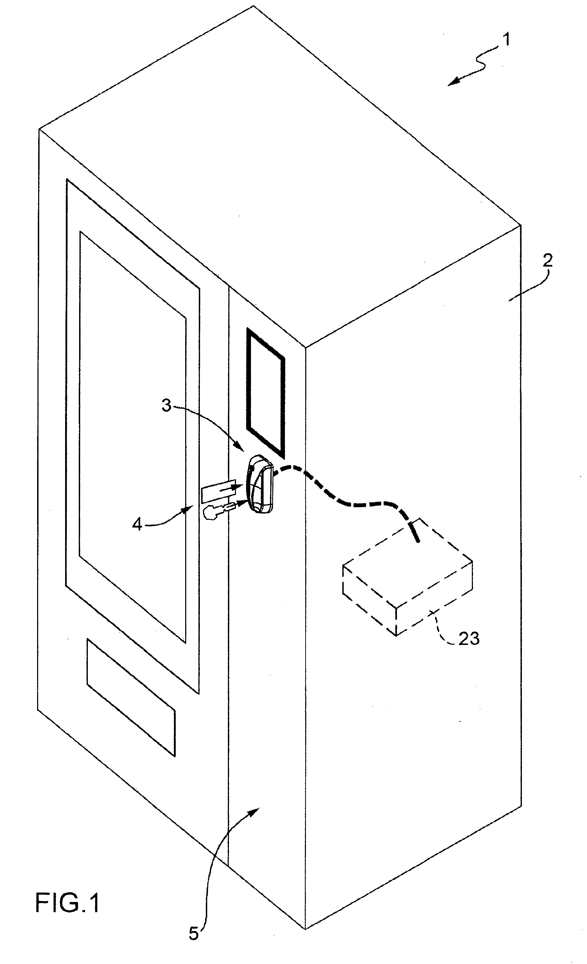

Number 1 in Figure 1 indicates as a whole a vending machine for dispensing user-requested products and/or services.

Vending machine 1 substantially comprises a preferably, though not necessarily, parallelepipedshaped casing 2 housing the products/services to be dispensed.

Vending machine 1 also comprises a reader 3, which is fitted preferably to the outside of casing 2 and provides for reading and identifying user data contained in contactless memory keys/cards 4, such as smartcards or similar hardware devices.

The user data stored in memory key/card 4 may comprise, for example, a purchase identification code and/or user credit for purchase of a product/service dispensable by vending machine 1. More specifically, memory key and/or card 4 storing the user data may comprise an RFID TAG (not shown) which communicates by roughly 125 kHz or 13.5 MHz frequency radio signals. In the example shown, the RFID TAG of memory key/card 4 operating at roughly 13.5 MHz communication frequency may be a MIFARE radiofrequency communication type. Memory keys/cards 4 of this sort are known and so not described in detail.

In the Figure 1 example, reader 3 is fixed firmly, but in easily removable manner, to a front wall 5, i.e. to the exposed wall, of casing 2, and substantially comprises a housing 6; and an electronic read/identification board 7 housed inside housing 6 and for reading/identifying the data/information contained in memory keys and/or cards 4.

More specifically, the exposed face 6a of housing 6 has an elongated opening 8 extending parallel to a predetermined axis A and shaped for insertion of a memory key/card 4.

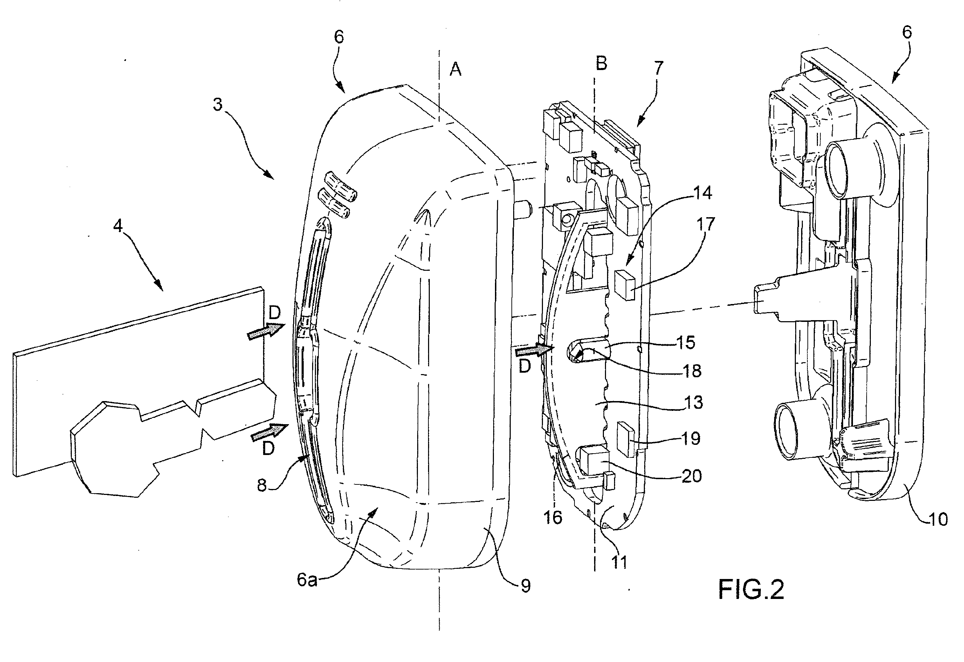

More specifically, in the Figure 2 example, housing 6 is divided into a front shell 9, in which through opening 8 is formed; and a rear supporting plate 10, which is fixed firmly, but in easily removable manner, to front shell 9 by means of fastening devices (not shown).

Electronic read/identification board 7 comprises a circuit board 11 of insulating electric material, with a central slot 12, which extends along a longitudinal axis B parallel to axis A, and is designed for insertion of a memory key/card 4; and a projecting tab 13 fixed to circuit board 11, at an inner lateral edge 12a of slot 12, so it is substantially perpendicular to circuit board 11.

In the example shown, projecting tab 13 is fixed firmly to circuit board 11, so it is parallel to and faces insertion slot 12 of memory keys and/or cards 4, and is also parallel to the insertion direction D of memory keys and/or cards 4 inside slot 12.

Electronic read/identification board 7 also comprises an electronic transmitting-receiving circuit 14 for transmitting and receiving radiofrequency signals, and in turn comprising at least a first and second antenna 15 and 16, which are both fixed to projecting tab 13, alongside slot 12, and are designed to transmit/receive radiofrequency signals to and from memory keys and/or cards 4.

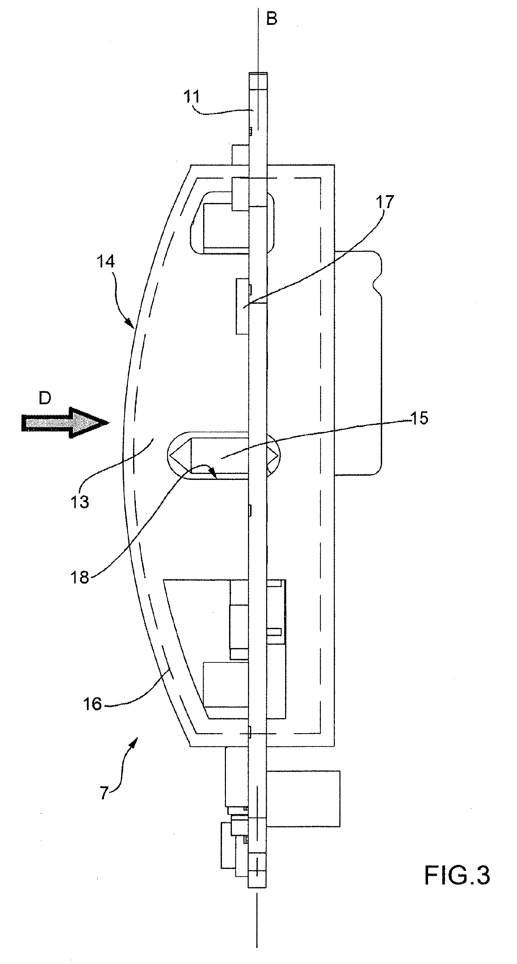

More specifically, first antenna 15 in Figures 2 and 3 comprises a dipole, which is housed inside a groove 18 in the centre of projecting tab 13, and transmits/receives roughly 125 kHz frequency signals to and from memory keys and/or cards 4 when these are positioned adjacent to and facing projecting tab 13.

More specifically, the dipole of first antenna 15 has a given impedance, and extends inside groove 18 in a direction substantially perpendicular to circuit board 11 and parallel to the insertion direction D of memory keys and/or cards 4 inside slot 12.

The second antenna 16 in Figures 2 and 3 comprises an annular coil of electric conducting material, which extends substantially along the peripheral edge of projecting tab 13, and is designed to transmit/receive radiofrequency signals of roughly 13.5 MHz frequency to and from memory keys and/or cards 4 when these are positioned alongside projecting tab 13.

Transmitting-receiving circuit 14 also comprises a read module 17, which is fixed firmly to circuit board 11 and connected to first and second antenna 15 and 16 to control and decode the radiofrequency signals to and from the memory key and/or card 4 inserted inside slot 12, and to supply the read user data. In the example shown, read module 17 comprises a MIFARE communication technology block 17a.

Electronic read/identification board 7 also comprises an electronic identification module 19 located on circuit board 11, and which identifies the memory key and/or card 4 to accordingly enable, or not, access to the product/service dispensing procedure.

Electronic read/identification board 7 also comprises an electronic pay control module 20 integrated firmly in circuit board 11, and which serves to check and update the credit stored in memory key and/or card 4, and cooperates with a controller 23 (Figure 1) to control, with the controller, product/service supply to the user.

In actual use, the user inserts memory key/card 4 inside opening 8 in housing 6. At this stage, the end portion of memory key/card 4 is inserted inside slot 12, in a position facing projecting tab 13 and hence first and second antenna 15 and 16. At this point, by means of first antenna 15 or second antenna 16, electronic read module 17 receives the radiofrequency signal containing the user data, so electronic identification module 19 identifies memory key/card 4, and electronic control module 20 commands controller 23 to dispense the requested product/service.

By installing first and second antenna 15 and 16 on the same projecting tab 13, in turn positioned parallel to insertion slot 12 of memory keys/cards 4 and perpendicular to circuit board 11, the reader described above has the advantage of being of extremely small width, thus reducing its overall size and enabling it to be fixed to the outside of vending machine 1.

It is important to point out that in the known type vending machines, the antenna of the card reader is positioned on the plane of the circuit board (i.e. coplanar with the circuit board), and in consequence, the circuit board has to be necessarily fixed to the vending machine casing, so as to be in a position facing the card to be able to read the card itself. In other words, the circuit board has to be placed orthogonal to the outer wall of the machine and parallel to the insertion direction of the slot (generally presenting on the casing) and in consequence, because its width, is not suitable to be fitted to the external outer wall of the machine.

On the contrary, placing first and second antenna on a same projecting tab, in turn positioned perpendicular to circuit board, allows to place circuit board parallel to outer wall of the vending machine reducing the overall size of the reader, which can therefore be placed to the external outer wall of the vending machine.

In addition, the hardware architecture of electronic read/identification board 7, i.e. forming read module 17, identification module 19, and control module 20 on the same electronic board housed inside the reader, has the advantage of greatly simplifying assembly and maintenance of the individual electronic modules.

Clearly, changes may be made to the reader as described and illustrated herein without, however, departing from the scope of the present invention as defined in the accompanying Claims.

## Claims

1. A reader (3), for reading memory keys and/or cards (4), which can be fixed firmly but in easily removable manner to a product/service vending machine (1), and comprises a housing (6), and an electronic read/identification board (7) housed inside the housing (6) to read/identify data/information contained in said memory keys and/or cards (4); said reader (3) being **characterized in that** said electronic read/identification board (7) comprises :
- a circuit board (11) in which is formed a central slot (12) extending along a given axis (B) and for insertion of said memory keys and/or cards (4);
- a projecting tab (13) fixed to said circuit board (11), at an inner lateral edge (12a) of said slot (12), so as to be perpendicular to said circuit board (11) and parallel to said given axis (B); and
- a first (15) and second (16) antenna fixed firmly to said projecting tab (13) and designed to operate at different frequencies from each other.

2. A reader as claimed in Claim 1, wherein said projecting tab (13) is fixed firmly to said circuit board (11) so as to be parallel to and face said slot (12), and also parallel to an insertion direction (D) of said memory keys and/or cards (4) inside the slot (12).

3. A reader as claimed in Claims 1 and 2, wherein said first antenna (15) is housed in a groove (18) formed on said projecting tab (13), and is designed to transmit/receive roughly 125 kHz frequency signals to and from said memory keys and/or cards (4).

4. A reader as claimed in any one of the foregoing Claims, wherein said second antenna (16) extends along a peripheral edge of said projecting tab (13), and is designed to transmit/receive radiofrequency signals of roughly 13.5 MHz frequency to and from said memory keys and/or cards (4).

5. A reader as claimed in Claim 4, wherein said second antenna (16) comprises an annular coil of electric conducting material.

6. A reader as claimed in any one of the foregoing Claims, and comprising electronic reading means (17) fixed firmly to said circuit board (11) and connected electrically to said first (15) and second (16) antenna to control and decode the radiofrequency signals transmitted/received to and from said memory keys and/or cards (4).

7. A reader as claimed in Claim 6, wherein said electronic reading means (17) comprise a MIFARE technology electronic block (17a).

8. A reader as claimed in any one of the foregoing Claims, and comprising electronic identification means (19) fixed firmly to said circuit board (11) and for identifying said memory key and/or card (4) to accordingly enable or disable access to the product/service dispensing procedure.

9. A reader as claimed in any one of the foregoing Claims, and comprising electronic pay control means (20) fixed firmly to said circuit board (11), and which check and update credit stored in said memory key and/or card (4), and cooperate with a controller (23) to control dispensing of products/services to the user.

10. A product/service vending machine (1), **characterized by** comprising a reader (3) as claimed in Claims 1 to 9.

## Patentansprüche

1. Ein Leser (3) zum Lesen von Speicherschlüsseln und/oder Speicherkarten (4), der an einer Produkt/Dienstleistungs-Verkaufsmaschine fest, jedoch einfach entfernbar angebracht werden kann und ein Gehäuse (6) sowie eine in dem Gehäuse (6) untergebrachte elektronische Lese-/Identifizierungsplatte (7) zum Lesen/Identifizieren von Daten/Informationen, die in den Speicherschlüsseln und/oder Speicherkarten (4) enthalten sind, umfasst; wobei der Leser (3) **dadurch gekennzeichnet ist, dass** die elektronische Lese-/Identifizierungsplatte (7) umfasst:
- eine Leiterplatte (11), in der ein mittiger Schlitz (12) gebildet ist, der sich längs einer gegebenen Achse (B) erstreckt und dazu dient, die Speicherschlüssel und/oder Speicherkarten (4) einzustecken;
- eine vorstehende Lasche (13), die an der Leiterplatte (11) an einer inneren Seitenkante (12a) des Schlitzes (12) so befestigt ist, dass sie zu der Leiterplatte (11) senkrecht und zu der gegebenen Achse (B) parallel ist; und
- eine erste (15) und eine zweite (16) Antenne, die an der vorstehenden Lasche (13) fest angebracht sind und entworfen sind, um bei voneinander verschiedenen Frequenzen zu arbeiten.

2. Ein Leser nach Anspruch 1, wobei die vorstehende Lasche (13) an der Leiterplatte (11) fest angebracht ist, so dass sie zu dem Schlitz (12) parallel und zugewandt ist und außerdem zu einer Einsteckrichtung (D) der Speicherschlüssel und/oder Speicherkarten (4) in dem Schlitz (12) parallel ist.

3. Ein Leser nach den Ansprüchen 1 und 2, wobei die erste Antenne (15) in einer in der vorstehenden Lasche (13) gebildeten Nut (18) untergebracht ist und entworfen ist, um Frequenzsignale mit grob 125 kHz zu den Speicherschlüsseln und/oder Speicherkarten (4) zu übermitteln bzw. hiervon zu empfangen.

4. Ein Leser nach einem der vorhergehenden Ansprüche, wobei sich die zweite Antenne (16) längs einer Umfangskante der vorstehenden Lasche (13) erstreckt und entworfen ist, Radiofrequenzsignale mit einer Frequenz von grob 13,5 MHz zu den Speicherschlüsseln und/oder Speicherkarten (4) zu übermitteln bzw. hiervon zu empfangen.

5. Ein Leser nach Anspruch 4, wobei die zweite Antenne (16) eine ringförmige Spule aus elektrisch leitendem Material umfasst.

6. Ein Leser nach einem der vorhergehenden Ansprüche, der elektronische Lesemittel (17) umfasst, die an der Leiterplatte (11) fest angebracht sind und mit der ersten (15) und der zweiten (16) Antenne elektrisch verbunden sind, um die Radiofrequenzsignale, die zu den Speicherschlüsseln und/oder Speicherkarten (4) gesendet und hiervon empfangen werden, zu steuern und zu decodieren.

7. Ein Leser nach Anspruch 6, wobei die elektronischen Lesemittel (17) einen elektronischen Block (17a) in MIFARE-Technologie umfassen.

8. Ein Leser nach einem der vorhergehenden Ansprüche, der elektronische Identifizierungsmittel (19) umfasst, die an der Leiterplatte (11) fest angebracht sind und dazu dienen, den Speicherschlüssel und/oder die Speicherkarte (4) zu identifizieren, um entsprechend den Zugang zu der Produkt-/Dienstleistungs-Ausgabeprozedur zu ermöglichen oder nicht zu ermöglichen.

9. Ein Leser nach einem der vorhergehenden Ansprüche, der elektronische Zahlungssteuermittel (20) umfasst, die an der Leiterplatte (11) fest angebracht sind und die Guthaben, das in dem Speicherschlüssel und/oder in der Speicherkarte (4) gespeichert ist, prüfen und aktualisieren und mit einer Steuereinheit (23) zusammenwirken, um die Ausgabe von Produkten/Dienstleistungen an den Anwender zu steuern.

10. Eine Produkt-/Dienstleistungs-Verkaufsmaschine (1), **gekennzeichnet durch** einen Leser (3) nach den Ansprüchen 1 bis 9.

## Revendications

1. Lecteur (3) pour lire des clés et/ou cartes mémoire (4), qui peuvent être fermement fixées mais d'une manière facilement amovible à un distributeur de produits/services (1) et comprend un boîtier (6) et une carte de lecture/identification électronique (7) logée à l'intérieur du boîtier (6) pour lire/identifier des données/informations contenues dans lesdites clés et/ou cartes mémoire (4) ; ledit lecteur (3) étant **caractérisé en ce que** ladite carte de lecture/identification électronique (7) comprend :
une carte de circuit imprimé (11) dans laquelle est formée une fente centrale (12) s'étendant le long d'un axe donné (B) et pour l'insertion desdites clés et/ou cartes mémoire (4) ;
une languette en saillie (13) fixée sur ladite carte de circuit imprimé (11), au niveau d'un bord latéral interne (12a) de ladite fente (12), afin d'être perpendiculaire à ladite carte de circuit imprimé (11) et parallèle audit axe donné (B) ; et
une première (15) et une seconde (16) antenne fermement fixées à ladite languette en saillie (13) et conçues pour fonctionner à des fréquences différentes l'une de l'autre.

2. Lecteur selon la revendication 1, dans lequel ladite languette en saillie (13) est fermement fixée à ladite carte de circuit imprimé (11) afin d'être parallèle à et faire face à ladite fente (12), et également parallèle à une direction d'insertion (D) desdites clés et/ou cartes mémoire (4) à l'intérieur de la fente (12).

3. Lecteur selon les revendications 1 et 2, dans lequel ladite première antenne (15) est logée dans une rainure (18) formée sur ladite languette en saillie (13), et est conçue pour transmettre/recevoir des signaux ayant approximativement une fréquence de 125 kHz à et desdites clés et/ou cartes mémoire (4).

4. Lecteur selon l'une quelconque des revendications précédentes, dans lequel ladite seconde antenne (16) s'étend le long d'un bord périphérique de ladite languette en saillie (13) et est conçue pour transmettre/recevoir des signaux de radiofréquence ayant une fréquence d'approximativement 13,5 MHz à et desdites clés et/ou cartes mémoire (4).

5. Lecteur selon la revendication 4, dans lequel ladite seconde antenne (16) comprend une bobine annulaire de matériau électriquement conducteur.

6. Lecteur selon l'une quelconque des revendications précédentes, et comprenant des moyens de lecture électronique (17) fermement fixés à ladite carte de circuit imprimé (11) et électriquement raccordés auxdites première (15) et seconde (16) antennes pour contrôler et décoder les signaux de radiofréquence transmis/reçus à et desdites clés et/ou cartes mémoire (4).

7. Lecteur selon la revendication 6, dans lequel lesdits moyens de lecture électronique (17) comprennent un bloc électronique (17a) de technologie MIFARE (17a).

8. Lecteur selon l'une quelconque des revendications précédentes, et comprenant des moyens d'identification électronique (19) fermement fixés à ladite carte de circuit imprimé (11) et pour identifier ladite clé et/ou carte mémoire (4) afin d'activer ou désactiver par conséquent l'accès à la procédure de distribution de produits/services.

9. Lecteur selon l'une quelconque des revendications précédentes, et comprenant des moyens de commande de paiement électronique (20) fermement fixés à ladite carte de circuit imprimé (11) et qui vérifient et mettent à jour le crédit stocké dans ladite clé et/ou carte mémoire (4), et coopèrent avec un organe de commande (23) pour commander la distribution des produits/services à l'utilisateur.

10. Distributeur de produits/services (1), **caractérisé en ce qu'**il comprend un lecteur (3) selon les revendications 1 à 9.
